# EUROPÄISCHE PATENTSCHRIFT

(11) **EP 1 714 846 B1**
(45) Veröffentlichungstag und Bekanntmachung des Hinweises auf die Patenterteilung: **11.07.2012**
(21) Anmeldenummer: 06007557.9
(22) Anmeldetag: 11.04.2006
(51) Int. Cl.: B60T 17/00, F16K 31/06

(54) **Ventilanordnung für die Versorgung eines Nutzfahrzeugs mit Druckluft**
Valve assembly for the supply of a pressurized air for a vehicle
Ensemble soupape pour l'alimentation d'air comprimé pour une véhicule

(30) Priorität: 22.04.2005 DE 102005018888
(43) Veröffentlichungstag der Anmeldung: 25.10.2006
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Mattusch, Gundula

(56) Entgegenhaltungen:
- EP-A- 0 031 082
- EP-A- 0 615 087
- EP-A- 0 689 117
- DE-A1- 1 550 112
- DE-A1- 2 339 592
- US-A- 4 681 142

## Beschreibung

Die Erfindung betrifft eine Ventilanordnung für die Versorgung eines Nutzfahrzeugs mit Druckluft, mit einer Magnetspule, einem Anker und einer Feder, wobei die Feder den Anker bezogen auf einen Ventilsitz in Schließrichtung mit Kraft beaufschlagt und wobei der Anker durch Bestromen der Magnetspule mittels einer elektronischen Steuerung entgegen der Schließrichtung des Ventilsitzes mit Kraft beaufschlagbar ist.

Die Erfindung betrifft weiterhin ein Mehrkreisschutzventil und eine Luftaufbereitungsanlage.

Gattungsgemäß offenbart das Dokument EP 0615087 eine Ventilanordnung mit den Merkmalen des Oberbegriffs des Anspruchs 1. Andere Ventilanordnungen kommen beispielsweise in Mehrkreisschutzventilen und Luftaufbereitungsanlagen zum Einsatz, wie sie aus der DE 44 21 575 C2 sowie der EP 0 776 807 B1 bekannt sind. Derartige Anlagen weisen zentral belüftete Mehrkreisschutzeinrichtungen auf. Diese sind mit einer Steuerelektronik ausgestattet, welche die Kreissicherungsventile beeinflussen kann. Neben den Betriebsbremskreisen und sonstigen Verbrauchern werden durch die Luftaufbereitungsanlagen insbesondere der Anhänger und die Feststellbremsanlage mit Druckluft beliefert. In diesem Zusammenhang ist zu bemerken, dass die beispielhaft genannten Druckluftaufbereitungsanlagen einen Druckluftbehälter in dem Anhänger- beziehungsweise Feststellbremsanlagenkreis erforderlich machen. Dies gilt insbesondere, da bei intakter Anlage eine Nachversorgung des Anhänger- beziehungsweise Feststellbremsanlagenkreises unterhalb eines vorgegebenen mechanischen Sicherungsdruckes nicht möglich ist. Im Hinblick auf die Feststellbremsanlage ist weiterhin zu bemerken, dass die genannten Druckluftaufbereitungsanlagen nicht sicherstellen können, dass die Feststellbremse nur dann lösbar ist, wenn die Betriebsbremse des Fahrzeugs betriebsfähig ist beziehungsweise eine Mindestabbremsung ermöglicht.

Ein weiteres Beispiel eines Mehrkreisschutzventils, bei dem die Kreissteuerungsfunktionen insbesondere im Hinblick auf die Anhängerversorgung und die Feststellbremsanlage verbesserungsfähig sind, ist in der DE 29 50 904 C2 angegeben.

Der Erfindung liegt die Aufgabe zugrunde, eine Ventilanordnung, ein Mehrkreisschutzventil und eine Druckluftaufbereitungsanlage zur Verfügung zu stellen, so dass es ermöglicht wird, die Druckluftanlage eines Nutzfahrzeugs im Hinblick auf Gewicht und Kosten zu verbessern, wobei ein sicherer Betrieb des Fahrzeugs auch im stromlosen Zustand des Mehrkreisschutzventils beziehungsweise der Luftaufbereitungsanlage gewährleistet sein soll; insbesondere soll die Ventilanordnung in robuster, einfacher Bauweise realisiert sein.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung wird nun mit Bezug auf die begleitenden Zeichnungen anhand bevorzugter Ausführungsformen beispielhaft erläutert.

Dabei zeigt:
- Figur 1: eine Schnittdarstellung einer ersten Ausführungsform einer erfindungsgemäßen Ventilanordnung;
- Figur 2: eine Schnittdarstellung einer zweiten Ausführungsform einer erfindungsgemäßen Ventilanordnung;
- Figur 3: eine Schnittdarstellung einer dritten Ausführungsform einer erfindungsgemäßen Ventilanordnung;
- Figur 4: ein Schaltbild einer ersten Ausführungsform eines erfindungsgemäßen Mehrkreisschutzventils, in dem eine erfindungsgemäße Ventilanordnung zum Einsatz kommen kann;

- Figur 5: ein Schaltbild einer zweiten Ausführungsform eines erfindungsgemäßen Mehrkreisschutzventils, in dem eine erfindungsgemäße Ventilanordnung zum Einsatz kommen kann; und
- Figur 6: ein Schaltbild einer erfindungsgemäßen Luftaufbereitungsanlage.

Bei der nachfolgenden Beschreibung der Zeichnungen bezeichnen gleiche Bezugszeichen gleiche oder vergleichbare Komponenten.

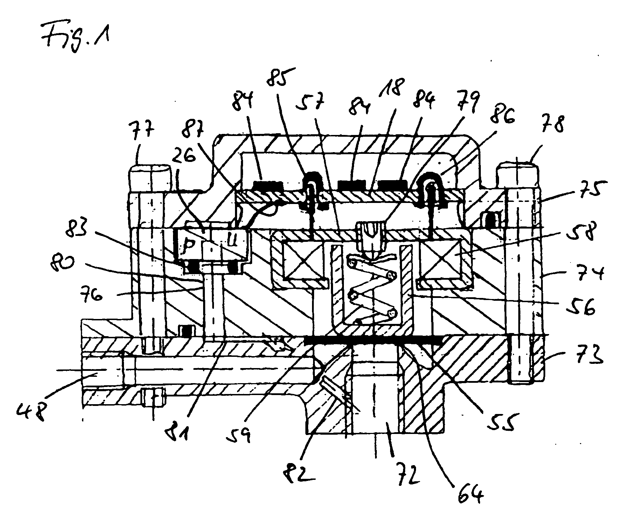

Figur 1 zeigt eine Schnittdarstellung einer ersten Ausführungsform einer erfindungsgemäßen Ventilanordnung. Die Ventilanordnung umfasst ein Grundgehäuse 73, ein daran anschließendes Zwischengehäuse 74 und ein wiederum am Zwischengehäuse 74 anschließendes Elektronikgehäuse 75. Die Gehäusekomponenten sind mittels Schrauben 77, 78 flanschartig miteinander verbunden.

In dem Grundgehäuse 73 sind eine Versorgungsleitung 48 und eine Verbraucherleitung 72 vorgesehen, die über einen Ventilsitz miteinander in Verbindung gebracht werden können. Das Grundgehäuse 73 trägt weiterhin eine Membran 55, die an der Abdichtung des Ventilsitzes 64 beteiligt ist.

In dem Zwischengehäuse 74 ist eine von einem Joch 57 umgebene Magnetspule 58 angeordnet. Konzentrisch innerhalb der Magnetspule 58 liegend ist ein Anker 56 vorgesehen. Dieser Anker 56 ist topfförmig, und in seinem Inneren ist eine Feder 59 konzentrisch mit dem Anker 56 und der Magnetspule 58 angeordnet, die den Anker 56 in Richtung des Ventilsitzes 64 mit Kraft beaufschlagt. Im stromlosen Zustand der Magnetspule 58 wird auf diese Weise die Verbindung zwischen der Versorgungsleitung 48 und der Verbraucherleitung 72 mittels der Membran 55 abgesperrt, vorrausgesetzt, dass der durch die Federkraft bestimmte Öffnungsdruck des Ventils nicht überschritten wird. Die Federkraft und damit der Öffnungsdruck des Ventils können durch die Einstellschraube 79 voreingestellt werden. In dem Zwischengehäuse 74 ist weiterhin ein Drucksensor 26 angeordnet. Dieser ist über eine das Zwischengehäuse 74 und das Grundgehäuse 73 durchdringende Leitung 76, die aus mehreren Leitungszweigen 80, 81, 82 besteht, mit der Verbraucherleitung 72 verbunden und somit in der Lage, den Druck in der Verbraucherleitung 72 zu messen. Der Drucksensor 26 ist mittels einer Dichtung 83 in das Zwischengehäuse 74 eingesetzt, so dass ein Austritt von Druckluft aus der Verbraucherleitung 72 über die Messleitung 76 vermieden wird.

In dem Elektronikgehäuse 75 ist eine die elektronische Steuerung beherbergende Leiterplatte 18 vorgesehen. Diese Leiterplatte 18 trägt elektronische Bauteile 84, und sie dient der Kontaktierung der Magnetspule 58 über die Kontaktstellen 85, 86. Weiterhin steht auch der Drucksensor 26 über eine elektrische Kontaktierung 87 mit der Leiterplatte 18 in Verbindung.

Wie bereits erwähnt, wird im stromlosen Zustand der Magnetspule 58 der Ventilsitz 64 durch die Kraft der Feder 59 geschlossen gehalten, vorausgesetzt der Öffnungsdruck des Ventils wird nicht überschritten. Wird nun die Magnetspule 58 aber bestromt, so kann der Anker 56 gegen die Kraft der Feder 59 angehoben werden. Somit ist es möglich, dass eine Nachversorgung der Verbraucherleitung 72 aus der Versorgungsleitung 48 stattfindet, obwohl der Öffnungsdruck des Ventils noch nicht erreicht ist. Es ist somit möglich, einen Verbraucher, insbesondere die Anhängerbremsanlage, direkt an die Verbraucherleitung 72 anzuschließen, ohne dass ein zusätzlicher über die Verbraucherleitung 72 zu befüllender Behälter vorzusehen wäre. Eine Nachversorgung der Anhängerbremsanlage kann nämlich direkt aus der Versorgungsleitung 48 und somit letztlich durch den Kompressor oder durch die Vorratsbehälter anderer Kreise erfolgen, die ebenfalls an der Versorgungsleitung 48 angeschlossen sind. Voraussetzung für diese Nachversorgung ist allerdings, dass die elektronische Steuerung einen Defekt in der Verbraucherleitung und den nachgeordneten Komponenten ausschließt. Ein übermäßiger Druckverlust in der Verbraucherleitung 72 würde beispielsweise durch den Drucksensor 26 ermittelt und, und die entsprechende Information würde an die elektronische Steuerung 18 weitergegeben. In einem solchen Fall würde eine Nachversorgung der Verbraucherleitung 72 unterbunden.

Die in Figur 1 dargestellte Ventilanordnung dient nicht nur zur Versorgung der Anhängerbremsanlage. Vielmehr ist es ebenfalls möglich, eine baugleiche oder ähnliche Ventilanordnung für die Versorgung der Betriebsbremskreise oder sonstiger Verbraucher vorzusehen. Die Möglichkeit des Eingriffs in das Öffnungs- beziehungsweise Schließverhalten des Ventils durch die elektronische Steuerung ist in jedem Falle ein nützliches Merkmal für eine intelligente Kreissicherung durch ein Mehrkreisschutzventil.

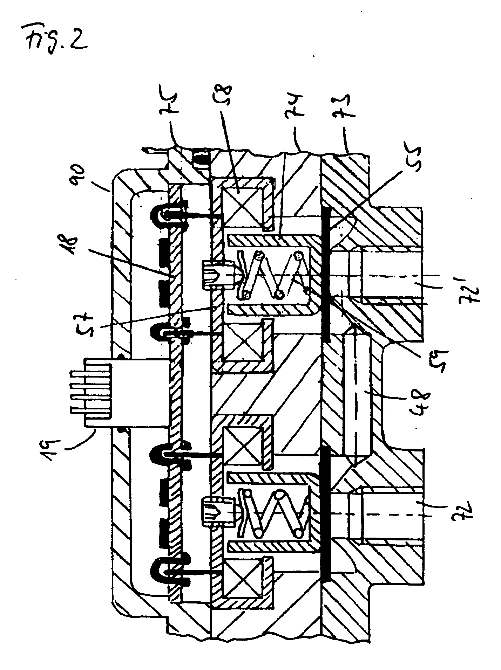

Figur 2 zeigt eine Schnittdarstellung einer zweiten Ausführungsform einer erfindungsgemäßen Ventilanordnung. Es sind zwei baugleiche Ventile nebeneinander angeordnet und an dieselbe Versorgungsleitung 48 angeschlossen. Die Versorgungsleitung 48 kann durch eine Stichleitung mit der primären Versorgung verbunden sein. Es sind zwei Verbraucherleitungen 72, 72' zu erkennen, die über identisch aufgebaute Ventile mit der Versorgungsleitung 48 in Verbindung gebracht werden können. Ein Mehrkreisschutzventil gemäß der vorliegenden Erfindung kann nun eine Vielzahl derartiger Ventile aufweisen, die in verschiedenartiger Anordnung in dem aus Grundgehäuse 73, Zwischengehäuse 74 und Elektronikgehäuse 75 bestehenden Gehäuse untergebracht sein können. Beispielsweise können sich weitere Ventilanordnungen, bezogen auf die Darstellung gemäße Figur 2, nach rechts oder links beziehungsweise unterhalb oder oberhalb der Papierebene anschließen. In der Darstellung gemäß Figur 2 ist weiterhin ein Stecker 19 erkennbar, der den Deckel 90 des Elektronikgehäuses 75 durchdringt und die Leiterplatte 18 direkt kontaktiert.

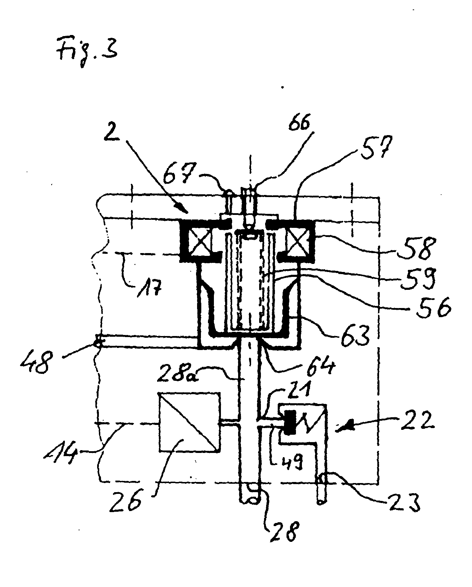

Figur 3 zeigt eine Schnittdarstellung einer dritten Ausführungsform einer erfindungsgemäßen Ventilanordnung. Bei dieser Ausführungsform der Ventilanordnung 2 sind das Schließventil und das elektromagnetische Stellglied wiederum konzentrisch ineinander liegend angeordnet. Die Zugmagnetfeder 59 ist direkt im Kern beziehungsweise Anker 56 angeordnet, welcher mit dem Joch 57 bei bestromter Spule 58 einen magnetischen Kreis bildet. Der Federraum der hier dargestellten elektromagnetischen Ventilanordnung ist über eine Entlüftung 67 mit der Atmosphäre verbunden. Neben dem Anhängerversorgungsanschluss 28 ist ein Anschluss 23 für die Feststellbremsanlage vorgesehen, wobei die beiden entsprechenden Kreise durch ein Rückschlagventil 22 gegeneinander abgesichert sind. Der Leitungszweig 49 zweigt von der Verbraucherleitung 28a an einem Knoten 21 ab. An der Verbraucherleitung 28a ist weiterhin ein Drucksensor 26 angeschlossen, der über eine elektrische Leitung 14 letztlich mit der (in Figur 3 nicht dargestellten) elektronischen Steuerung verbunden ist. Im Hinblick auf die Auslegung des eigentlichen Ventils ist noch zu bemerken, dass, im Gegensatz zu den Ausführungsformen gemäß den Figuren 1 und 2, wo Membranventile beschrieben wurden, gemäß Figur 3 ein Kolbenventil mit einem Ventilkolben 63 vorliegt. Wird die Spule 58 über die elektrische Leitung 17 bestromt, so kann der Anker 56 gegen die Kraft der Feder 59 angehoben werden, und der Ventilkolben 53 kann der Bewegung des Ankers 56 folgen. Somit wird eine Verbindung zwischen der Versorgungsleitung 48 und der Verbraucherleitung 28a hergestellt. Die Leitungen 48 und 28a können auch vertauscht sein, so dass ein zentral belüftetes Schließventil vorliegt. Dies gilt auch für die Leitungen 48 und 72, 72' der Figuren 1 und 2.

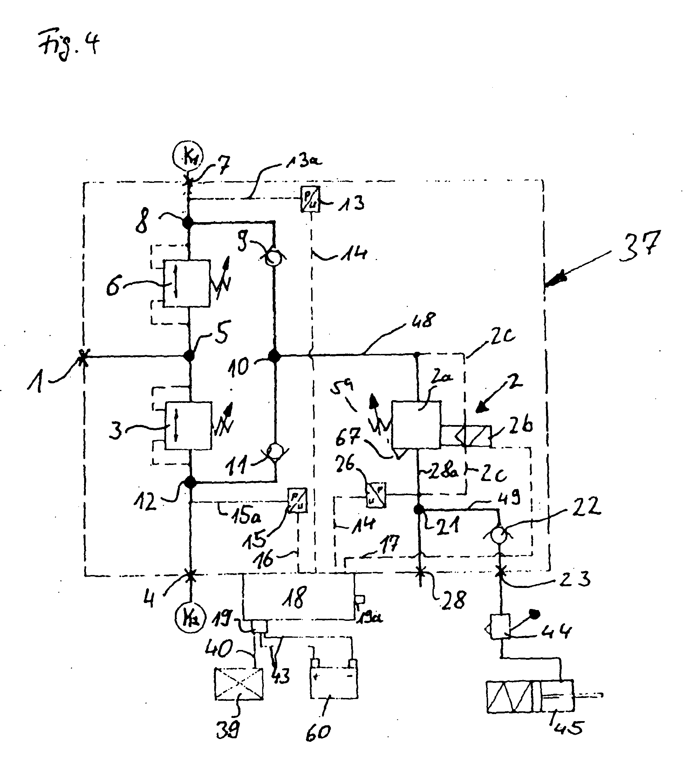

Figur 4 zeigt ein Schaltbild einer ersten Ausführungsform eines erfindungsgemäßen Mehrkreisschutzventils, in dem eine erfindungsgemäße Ventilanordnung zum Einsatz kommen kann. Das Mehrkreisschutzventil 37 ist mit einer elektronischen Steuerung 18 ausgestattet, die insbesondere zum Erfassen von Messwerten und sonstigen Daten sowie zum Steuern der Schaltfunktionen des Mehrkreisschutzventils 37 vorgesehen ist. Die elektronische Steuerung 18 weist einen Zentralstecker 19 auf, über den eine Energieversorgung aus der Fahrzeugbatterie 60 über Versorgungsleitungen 43 erfolgt. Weiterhin ist eine Datenleitung 40 an den Zentralstecker 19 angeschlossen. Diese Datenleitung 40 dient beispielsweise der Übertragung digitaler Daten zu einem Display 39, das vorzugsweise im Führerhaus des Nutzfahrzeugs angeordnet ist. Die Datenleitung 40 kann bidirektional sein. Neben der Datenleitung 40 können weitere Datenleitungen an den Zentralstecker 19 angeschlossen sein, über die Daten aus dem Steuergerät 18 an weitere Komponenten des Nutzfahrzeugs geliefert werden beziehungsweise über die dem Steuergerät 18 Daten von anderen Komponenten zur Verfügung gestellt werden können. An der elektronischen Steuerung 18 ist weiterhin ein Redundanzstecker 19a vorgesehen. Dieser kann den Zentralstecker 19 ersetzen, insbesondere bei einem Defekt des Zentralsteckers.

In der Peripherie des Mehrkreisschutzventils 37 sind weiterhin zwei Druckluftbehälter K₁ und K₂ angeordnet, die über das Mehrkreisschutzventil 37 befüllt werden. Die Behälter K₁ beziehungsweise K₂ sind an den Druckluftausgängen 7 beziehungsweise 4 des Mehrkreisschutzventils 37 angeschlossen.

Weiterhin ist eine Feststellbremsanlage durch die symbolische Darstellung eines Feststellbremsventils 44 und eines Federspeicherzylinders 45 gezeigt. Diese Feststellbremsanlage ist an einem Ausgang 23 des Mehrkreisschutzventils 37 angeschlossen.

Neben den genannten Ausgängen 4, 7, 23 des Mehrkreisschutzventils 37 ist ein weiterer Ausgang 28 vorgesehen, der der Versorgung eines Anhängers mit Druckluft dient.

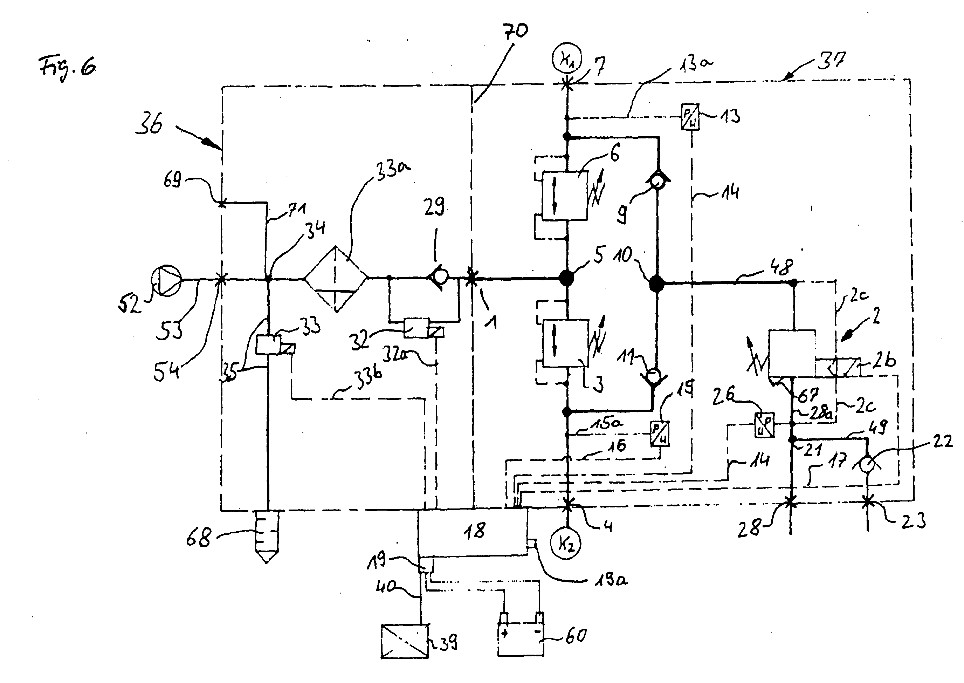

Ferner ist ein Drucklufteingang 1 vorgesehen, dem Druckluft von einem Kompressor 52 (siehe Figur 6) beziehungsweise einem Fremdbefüllungseingang 69 (siehe Figur 6) zugeführt werden kann.

Der Mehrkreisschutzventileingang 1 ist über einen gemeinsamen Eingangsknoten 5 mit einem ersten Überströmventil 6 verbunden, welches ausgangseitig mit dem Druckluftausgang 7 gekoppelt ist. An dem gemeinsamen Eingangsknoten 5 ist weiterhin ein zweites Überströmventil 3 angeschlossen, das ausgangseitig mit dem zweiten Druckluftausgang 4 gekoppelt ist. An der Ausgangsseite des ersten Überströmventils 6 ist an einem Anschluss 8 ein dem Druckluftbehälter K₁ zugeordnetes Rückschlagventil 9 angeschlossen. In vergleichbarer Weise ist an der Ausgangsseite des zweiten Überströmventils 3 ein Rückschlagventil 11 über einen Anschluss 12 angekoppelt, wobei dieses Rückschlagventil 11 dem zweiten Druckluftbehälter K₂ zugeordnet ist. Beide Rückschlagventile 9, 11 führen zu einem gemeinsamen Ausgangsknoten 10 der Überströmventile 3, 6.

An dem gemeinsamen Ausgangsknoten 10 ist über einen Leitungszweig 48 eine elektromechanische Ventilanordnung 2 angeschlossen. Über diese elektromechanische Ventilanordnung 2 sind die Druckluftausgänge 23 und 28 über einen gemeinsamen Knoten 21 an den gemeinsamen Ausgangsknoten 10 der Überströmventile 3, 6 angeschlossen, wobei hierfür ausgangseitig der elektromechanischen Ventilanordnung 2 eine Anhngerversorgungsleitung 28a und ein an dem Knoten 21 beginnender Leitungszweig 49 mit darin angeordnetem Rückschlagventil 22 für die Feststellbremse vorgesehen sind.

Das Mehrkreisschutzventil 37 umfasst weiterhin mehrere Drucksensoren 13, 15, 26. Der Drucksensor 13 misst über einen Leitungszweig 13a den Druck am Druckluftausgang 7. In analoger Weise misst der Drucksensor 15 über einen Leitungszweig 15a den Druck am Druckluftausgang 4. Der Drucksensor 26 misst den Druck am Druckluftausgang 28. Der Drucksensor 13 ist über eine elektrische Leitung 14 mit der elektronischen Steuerung 18 verbunden. Der Drucksensor 15 ist über eine elektrische Leitung 16 mit der elektronischen Steuerung 18 verbunden. Der Drucksensor 26 ist über eine elektrische Leitung 14 mit der elektronischen Steuerung 18 verbunden.

Die elektromechanische Ventilanordnung 2 umfasst ein mechanisches Schließventil 2a und ein elektromagnetisches Stellglied 2b, die in erfindungsgemäßer Weise, das heißt wie in Bezug in die Figuren 1 bis 3 beschrieben, ausgebildet sind.

Mittels einer Vorsteuer- und Bypassleitung 2c kann das elektromagnetische Stellglied 2b als pneumatisch vorgesteuertes elektromagnetisches Stellglied ausgelegt sein. Das elektromagnetische Stellglied 2b ist über eine elektrische Leitung 17 mit der elektronischen Steuerung 18 verbunden.

Das Mehrkreisschutzventil 37 gemäß Figur 4 arbeitet insbesondere im Hinblick auf die elektromechanische Ventilanordnung 2 wie folgt. Im drucklosen Zustand der Anlage strömt Luft vom Mehrkreisschutzventileingang 1 zum gemeinsamen Eingangsknoten 5. An diesem Punkt steigt der Luftdruck bis zum Öffnungsdruck der Überströmventile 3 oder 6 an, welche sich danach öffnen und eine Luftströmung zunächst zu den Behältern K₁ und K₂ zulassen. Die Luft strömt dann über die Rückschlagventile 9, 11 zum gemeinsamen Ausgangsknoten 10 und von dort zur elektromechanischen Ventilanordnung 2. Die elektromechanische Ventilanordnung wird anfänglich über die Feder 59 noch geschlossen gehalten, da der durch die Feder vorbestimmte Öffnungsdruck noch nicht erreicht ist. Erst wenn der Druck in zumindest einem der Behälter K₁ oder K₂ den Öffnungsdruck der elektromechanischen Ventilanordnung 2 überschreitet, kann die Luft zum Knoten 21 strömen, so dass erst jetzt bei geöffnetem Feststellbremsventil 44 der Federspeicherzylinder 45 belüftet werden kann, um die Feststellbremse zu lösen.

Die elektromechanische Ventilanordnung ist aber auch in der Lage, eine Luftströmung zum Knoten 21 und von dort insbesondere zum Anhänger zuzulassen, wenn der Öffnungsdruck des Schließventils 2a noch nicht erreicht ist. Das Schließventil 2a kann nämlich durch das elektromagnetische Stellglied 2b, welches beispielsweise als Stoßmagnet oder Zugankermagnet ausgebildet sein kann, geöffnet werden. Zu diesem Zweck wird das elektromagnetische Stellglied 2b über die Leitung 17 durch die elektronische Steuerung 18 erregt. Dies ist dann sinnvoll, wenn der Druck im Anhängerkreis so tief gefallen ist, dass das mechanische Schließventil 2a infolge des Unterschreitens des mechanisch vorgegebenen Schließdrucks bereits geschlossen ist, der Anhänger jedoch weiterhin Druckluft benötigt. Dadurch, dass somit auch unterhalb des Öffnungsdrucks des Schließventils 2a eine Nachversorgung des Anhängers stattfinden kann, ist ein separater Druckluftbehälter für den Anhänger entbehrlich.

Eine Bedingung dafür, dass eine Nachversorgung des Anhängers stattfindet, besteht darin, dass die Steuerelektronik keinen Kreis-, Geräte- oder Systemdefekt detektiert hat. Als Daten für die Defektanalyse dienen dem Steuergerät 18 digitale Daten, welche über den Zentralstecker 19 beziehungsweise den Redundanzstecker 19a zur Verfügung gestellt werden. Weitere im Hinblick auf die Defekterkennung zu berücksichtigende Werte werden von den Drucksensoren 13, 15, 26 geliefert. Die außerhalb des Mehrkreisschutzventils 37 erfassten und für die Defekterkennung zu berücksichtigenden Daten können zum Beispiel von externen Sensoren oder elektropneumatischen Ventilen des Zugfahrzeugs beziehungsweise des Anhängerfahrzeugs stammen, beispielsweise im Zusammenhang mit EBS, ABS, ESP, elektrischen Luftfedersystemen oder den Feststellbremssystemen. Sollte ein Defekt vorliegen, so wird das elektromagnetische Stellglied abgeschaltet und eine Warnlampe am Display 39 über die digitale Datenleitung 40 aktiviert. Die Anhängerversorgung ist dann nur noch bis zum mechanischen Schließdruck sichergestellt. Ein Weiterfahren des Fahrzeugs bis zur nächsten Reparaturwerkstatt ist dann noch möglich.

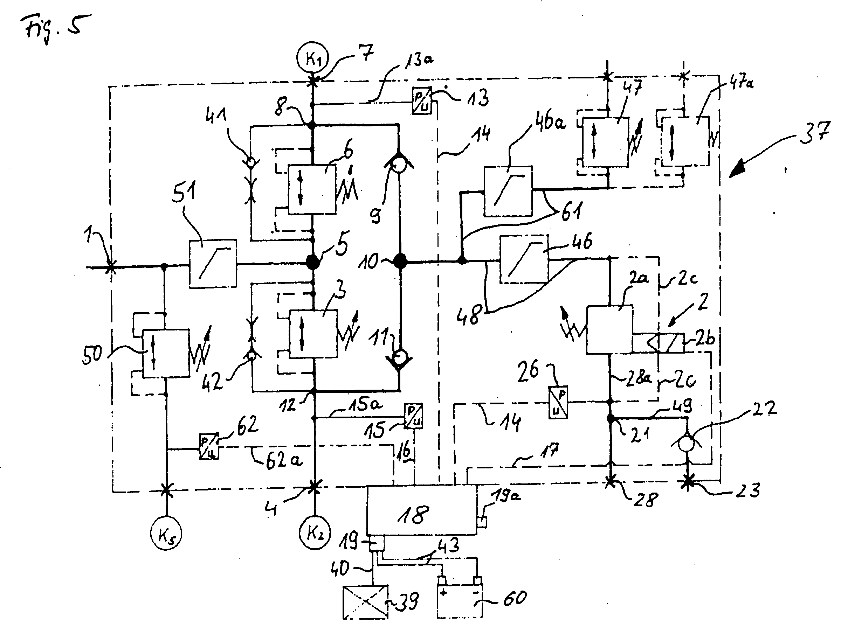

Figur 5 zeigt ein Schaltbild einer zweiten Ausführungsform eines erfindungsgemäßen Mehrkreisschutzventils, in dem eine erfindungsgemäße Ventilanordnung zum Einsatz kommen kann. In der Peripherie des hier dargestellten Mehrkreisschutzventils 37 ist zusätzlich ein Behälter k₅ für einen Luftfederkreis vorgesehen. Dieser wird über ein im Mehrkreisschutzventil 37 vorgesehenes Überströmventil 50 versorgt. Der Druck im Kreis 5 wird über einen Drucksensor 62 erfasst, welcher über eine elektrische Leitung 62a mit der elektronischen Steuerung 18 verbunden ist. Zwischen dem Mehrkreisschutzventileingang 1 und dem gemeinsamen Eingangsknoten 5 ist eine Druckbegrenzung 51 integriert, die den Druck für die Kreise K₁ und K₂ begrenzt. Dies ist erforderlich, wenn der Druck der Luftfederanlage größer werden kann als der zulässige Betriebsbremsdruck für die Betriebsbremse. Weiterhin sind in dieser Ausführungsform parallel zu den Überströmventilen 3 beziehungsweise 6 Bypassrückschlagventile 42 beziehungsweise 41 mit zugeordneter Drossel verbaut. Durch diese kann die Luft parallel zu den Überströmventilen 3 und 6 in die Behälter K₁ und K₂ strömen. Dies hat den Vorteil, dass ein durch Großserienproduktion bedingter Einstellfehler des Öffnungsdruckes der Überströmventile 3, 6 ausgeglichen wird, wodurch ein gleichzeitiges Öffnen der Überströmventile 3, 6 ermöglicht wird.

Weiterhin ist eine Druckbegrenzung 46 für den Anhängerkreis am Ausgang 28 und die Feststellbremsanlage am Ausgang 23 integriert. Der Leitungszweig 48, in den der Druckbegrenzer 46 integriert ist, zweigt von dem gemeinsamen Ausgangsknoten 10 der Überströmventile 3, 6 ab. An dem gemeinsamen Ausgangsknoten 10 kann über einen Leitungszweig 61 ein weiterer Druckbegrenzer 46a angeschlossen sein, über den ein Überströmventil 47 für Nebenverbraucher versorgt wird. Zusätzlich zu dem Überströmventil 47 können weitere Überströmventile über den Druckbegrenzer 46a versorgt werden, beispielsweise das dargestellte Überströmventil 47a.

Figur 6 zeigt ein Schaltbild einer erfindungsgemäßen Luftaufbereitungsanlage. Die Lufttrocknereinheit 36 ist vorzugsweise über eine Flanschverbindung 70 mit dem Mehrkreisschutzventil 37 gekoppelt, so dass das Mehrkreisschutzventil, die Lufttrocknereinheit 36 und die gemeinsame elektronische Steuervorrichtung jeweils separiert werden können, insbesondere zum Zwecke des Austauschs bei Defekten.

Die Lufttrocknereinheit 36 hat einen Lufttrocknereingang 34, an den über eine Förderleitung 53 ein Kompressor 52 angeschlossen ist. Weiterhin weist die Lufttrocknereinheit 36 einen Fremdbefüllungseingang 69 auf. Innerhalb der Lufttrocknereinheit 36 sind eine elektromagnetische Regenerationseinheit 32, eine elektromagnetische Ablassventileinheit 33 und eine Trocknerkartusche 33a vorgesehen. Die elektromagnetische Regenerationseinheit 32 ist parallel zu einem der Trocknerkartusche 33 nachgeordneten Rückschlagventil 42 angeordnet und von der elektronischen Steuerung 18 über eine elektrische Leitung 32a ansteuerbar. Die elektromagnetische Ablassventileinheit 33 ist in einer Leitung 35 angeordnet, die einen zwischen dem Lufttrocknereingang 34 und der Trocknerkartusche 33a liegenden Knoten 34 mit einem nach außen führenden Schaldämpfer 68 verbindet. Die elektromagnetische Ablassventileinheit 33 ist über eine elektrische Leitung 33b mit der elektronischen Steuerung 18 verbunden. An den erwähnten Knoten 34 ist weiterhin der Fremdbefüllungseingang 69 über eine Leitung 71 angeschlossen.

Bei dieser Ausführungsform kann der elektromechanische Lufttrockner 36 ohne das Verlegen von externen Leitungen in einem an das Mehrkreisschutzventil 37 angeflanschten Ventilblock untergebracht werden. Ebenfalls ist es möglich, den Lufttrockner in demselben Ventilblock vorzusehen, wie auch das Mehrkreisschutzventil 37.

### Bezugszeichenliste

- K1: Behälter Kreis 1 der Betriebsbremse
- K2: Behälter Kreis 2 der Betriebsbremse
- K3: Behälter Luftfederkreis
- 1: Mehrkreisschutzventileingang
- 2: elektromechanische Ventileinheit
- 2a: mechanisches Schließventil
- 2b: elektromagnetisches Stellglied
- 2c: Vorsteuer und Bypassleitung
- 3: zweites Überströmventil
- 4: Druckluftausgang
- 5: gemeinsamer Eingangsknoten
- 6: erstes Überströmventil
- 7: Druckluftausgang
- 8: Anschluss
- 9: Rückschlagventil
- 10: gemeinsamer Ausgangsknoten
- 11: Rückschlagventil
- 12: Anschluss
- 13: Drucksensor
- 13a: Leitungszweig
- 14: elektrische Leitung
- 15a: Leitungszweig
- 15: Drucksensor
- 16: elektrische Leitung
- 17: elektrische Leitung
- 18: elektronische Steuerung, Leiterplatte
- 19: Zentralstecker
- 19a: Redundanzstecker
- 21: Knoten
- 22: Rückschlagventil für Feststellbremsanlage
- 23: Anschluss für Feststellbremsanlage, Druckluftausgang
- 26: Druckluftsensor
- 28: Anhängerversorgungsanschluss, Druckluftausgang
- 28a: Anhängerversorgungsleitung
- 29: Druckreglerrückschlagventil
- 32: elektromagnetische Regenerationseinheit
- 32a: elektrische Leitung
- 33: elektromagnetische Ablassventileinheit
- 33a: Trocknerkartusche
- 33b: elektrische Leitung
- 34: Knoten
- 35: Ablassleitung
- 36: elektromechanischer Lufttrockner
- 37: elektromechanisches Mehrkreisschutzventil
- 39: Display
- 40: Datenleitung für digitale Daten
- 41: Bypassrückschlagventile
- 42: Bypassrückschlagventile
- 43: Versorgungsleitungen
- 44: Feststellbremsventil
- 45: Federspeicherzylinder
- 46: Druckbegrenzer
- 46a: Druckbegrenzer
- 47: Überströmventil
- 47a: Überströmventil
- 48: Leitungszweig
- 49: Leitungszweig
- 50: Überströmventil
- 51: Druckbegrenzer für Betriebsbremse
- 52: Kompressor
- 53: Förderleitung
- 54: Lufttrocknereingang
- 55: Membran
- 56: Kern, Anker
- 57: Joch
- 58: Spule
- 59: Zugmagnetfeder
- 59a: Zugmagnetfeder
- 60: Fahrzeugbatterie
- 61: Leitungszweig
- 62: Drucksensor
- 62a: elektrische Leitung
- 63: Ventilkolben
- 64: Ventilsitz
- 66: Einstellschraube
- 67: Entlüftung
- 68: Schalldämpfer
- 69: Fremdbefüllungseingang
- 70: Flanschverbindung
- 71: Leitung
- 72: Verbraucherleitung
- 73: Grundgehäuse
- 74: Zwischengehäuse
- 75: Elektronikgehäuse
- 76: Leitung
- 77: Schraube
- 78: Schraube
- 79: Einstellschraube
- 80: Leitungszweig
- 81: Leitungszweig
- 82: Leitungszweig
- 83: Dichtung
- 84: elektronische Bauteile
- 85: Kontaktstelle
- 86: Kontaktstelle
- 87: Kontaktierung
- 90: Deckel

## Patentansprüche

1. Ventilanordnung für die Versorgung eines Nutzfahrzeugs mit Druckluft, mit einer Magnetspule (58), einem Anker (56) und einer Feder, wobei die Feder (59) den Anker (56) bezogen auf einen Ventilsitz (64) in Schließrichtung mit Kraft beaufschlagt und wobei der Anker (56) durch Bestromen der Magnetspule (58) mittels einer elektronischen Steuerung (18) entgegen der Schließrichtung des Ventilsitzes (64) mit Kraft beaufschlagbar ist, wobei
- der Anker (56) die Feder (59) zumindest teilweise topfartig umgibt,
- sich die Feder (59) am Boden des topfartigen Ankers (56) abstützt und
- die durch die Ventilanordnung gegeneinander abzudichtenden bzw. miteinander zu verbindenden Leitungen, das heißt eine Versorgungsleitung (48) und eine Verbraucherleitung (72), und der Ventilsitz (64) in einem Grundgehäuse (73) angeordnet sind, **dadurch gekennzeichnet,**
- **dass** die Magnetspule (58), der Anker (56) und die Feder (59) in einem Zwischengehäuse (74) konzentrisch angeordnet sind,
- **dass** die elektronische Steuerung in einem Elektronikgehäuse (75) angeordnet ist und
- **dass** das Grundgehäuse (73), das Zwischengehäuse (74) und das Elektronikgehäuse (75) in der genannten Reihenfolge flanschartig miteinander verbunden sind.

2. Ventilanordnung nach Anspruch 1, **dadurch gekennzeichnet, dass** die Magnetspule (58) von einem Joch (57) umgeben ist.

3. Ventilanordnung nach Anspruch 1 oder 2, **dadurch gekennzeichnet, dass** der topfartige Anker (56) zum Verschließen des Ventilsitzes (64) eine Membran auf den Ventilsitz (55) drückt.

4. Ventilanordnung nach Anspruch 1 oder 2, **dadurch gekennzeichnet, dass** der topfartige Anker (56) im geschlossenen Zustand des Ventils einen Kolben (63) auf den Ventilsitz (64) drückt.

5. Ventilanordnung nach einem der vorhergehenden Ansprüche, **dadurch gekennzeichnet, dass** die Federkraft voreinstellbar ist.

6. Ventilanordnung für die Versorgung eines Nutzfahrzeugs mit Druckluft nach Anspruch 1, **dadurch gekennzeichnet, dass** in dem Zwischengehäuse ein Drucksensor (62) angeordnet ist, der über eine das Zwischengehäuse (74) und das Grundgehäuse (73) durchdringende Leitung mit der Verbraucherleitung (72) verbunden ist und der mit der in dem Elektronikgehäuse (75) angeordneten elektronischen Steuerung (18) elektrisch verbunden ist.

7. Ventilanordnung für die Versorgung eines Nutzfahrzeugs mit Druckluft nach Anspruch 1, **dadurch gekennzeichnet, dass** in dem Grundgehäuse (73) bzw. dem Zwischengehäuse (74) mehrere, jeweils zusammenwirkende Ventilsitze (64), Magnetspulen (58), Anker (56) und Federn (59) angeordnet sind.

8. Mehrkreisschutzventil mit einer Ventilanordnung nach einem der vorangehenden Ansprüche.

9. Luftaufbereitungsanlage mit einer Ventilanordnung nach einem der Ansprüche 1 bis 7.

## Claims

1. Valve assembly for the supply of a commercial vehicle with compressed air, comprising a magnetic coil (58), an armature (56) and a spring, wherein said spring (59) acts upon said armature (56) with a force along the closing direction, relative to a valve seat (64), and wherein said armature (56) is adapted to be acted upon with a force opposite to the closing direction of said valve seat (64) by application of current to said magnetic coil (58) by means of an electronic controller (18), wherein
- said armature (56) surrounds said spring (59) at least partly in a pot-like form,
- said spring (59) is supported on the bottom of said pot-like armature (56), and
- the lines to be isolated from each other or to be connected to each other by said valve assembly, i.e. a supply line (48) and a load line (72), and said valve seat (64) are disposed in a basic housing (73), **characterised in**
- **that** said magnetic coil (58), said armature (56) and said spring (59) are concentrically arranged in an intermediate housing (74),
- **that** said electronic controller is disposed in an electronic system housing (75), and
- **that** said basic housing (73), said intermediate housing (74) and said electronic system housing (75) are connected to each other in the indicated order in a flange-like manner.

2. valve assembly according to Claim 1, **characterised in that** said magnetic coil (58) is surrounded by a yoke (57).

3. Valve assembly according to Claim 1 or 2, **characterised in that** said pot-like armature (56) presses a diaphragm onto said valve seat (55) for closing said valve seat (64).

4. Valve assembly according to Claim 1 or 2, **characterised in that** in the closed condition of said valve, said pot-like armature presses a piston (63) onto said valve seat (64).

5. Valve assembly according to any of the preceding Claims, **characterised in that** the resilience of the spring can be preset.

6. Valve assembly for the supply of a commercial vehicle with compressed air, according to Claim 1, **characterised in that** a pressure gauge (62) is disposed in said intermediate housing, which is connected via a line passed through said intermediate housing (74) and said basic housing (73) to said load line (72) and which is electrically connected to said electronic controller (18) disposed in said electronic system housing (75).

7. Valve assembly for the supply of a commercial vehicle with compressed air, according to Claim 1, **characterised in that** a plurality of respectively interacting valve seats (64), magnetic coils (58), armatures (56) and springs (59) are disposed in said basic housing (73) or said intermediate housing (74).

8. Multi-circuit protective valve including a valve assembly according to any of the preceding Claims.

9. Air conditioning system including a valve assembly according to any of the Claims 1 to 7.

## Revendications

1. Agencement de soupape pour l'alimentation d'un véhicule utilitaire en air comprimé, comprenant une bobine (58) d'électroaimant, un induit (56) et un ressort, le ressort (59) appliquant une force à l'induit (56) dans la direction de fermeture rapportée à un siège (54) de soupape et l'induit (56) pouvant être soumis à une force dans le sens contraire au sens de fermeture du siège (64) de soupape par alimentation en courant de la bobine (58) d'électroaimant au moyen d'une commande (18) électronique, dans lequel
- l'induit (56) entoure au moins en partie à la manière d'un pot le ressort (59),
- le ressort (59) s'appuie sur le fond de l'induit (56) en forme de pot, et
- les conduits à rendre étanche les uns par rapport aux autres par l'agencement de soupape ou à relier les uns aux autres, c'est-à-dire un conduit (48) d'alimentation et un conduit (72) d'utilisateur, et le siège (64) de vanne sont disposés dans un boîtier (73) de base, **caractérisé**
- **en ce que** la bobine (58) d'électroaimant, l'induit (56) et le ressort (59) sont disposés concentriquement dans un boîtier (74) intermédiaire,
- **en ce que** la commande électronique est disposée dans un boîtier (75) électronique, et
- **en ce que** le boîtier (73) de base, le boîtier (74) intermédiaire et le boîtier (75) électronique sont bridés les uns aux autres dans l'ordre indiqué.

2. Agencement de soupape suivant la revendication 1, **caractérisé en ce que** la bobine (58) d'électroaimant est entourée d'une culasse (57).

3. Agencement de soupape suivant la revendication 1 ou 2, **caractérisé en ce que** l'induit (56) en forme de pot repousse, pour la fermeture du siège (64) de soupape, une membrane sur le siège (55) de soupape.

4. Agencement de soupape suivant la revendication 1 ou 2, **caractérisé en ce que** l'induit (56) en forme de pot repousse, à l'état fermé de la soupape, un piston (63) sur le siège (64) de soupape.

5. Agencement de soupape suivant l'une des revendications précédentes, **caractérisé en ce que** la force du ressort est réglable à l'avance.

6. Agencement de soupape pour l'alimentation d'un véhicule utilitaire en air comprimé suivant la revendication 1, **caractérisé en ce que** dans le boîtier intermédiaire est disposé un capteur (62) de pression, qui est relié au conduit (72) d'utilisateur par un conduit traversant le boîtier (74) intermédiaire et le boîtier (73) de base et qui est relié électriquement à la commande électronique disposée dans le boîtier (75) électronique.

7. Agencement de soupape pour l'alimentation d'un véhicule utilitaire en air comprimé suivant la revendication 1, **caractérisé en ce que** plusieurs sièges (64) de soupape, bobines (58) d'électroaimant, induits (56) et ressorts (59) coopérant respectivement sont disposés dans le boîtier (73) de base et dans le boîtier (74) intermédiaire.

8. Soupape de protection à circuit multiples, ayant un agencement de soupape suivant l'une des revendications précédentes.

9. Système de traitement d'air ayant un agencement de soupape suivant l'une des revendications 1 à 7.
